# EUROPEAN PATENT APPLICATION

(11) **EP 4 425 801 A1**
(43) Date of publication of application: **04.09.2024**
(21) Application number: 22897457.2
(22) Date of filing: 18.10.2022
(51) Int. Cl.: H04B 7/06, H04W 36/14

(54) **ANTENNA CONTROL METHOD, ELECTRONIC DEVICE AND STORAGE MEDIUM**

(30) Priority: 23.11.2021 CN 202111395040
(71) Applicant: ZTE Corporation, Shenzhen, Guangdong Province 518057 (CN)
(72) Inventor: SHEN, Shaowu, Shenzhen, Guangdong 518057 (CN)
(74) Representative: Aipex B.V.
(86) International application number: PCT/CN2022/125802
(87) International publication number: WO 2023/093374

(57) **Abstract**

Disclosed are an antenna control method, an electronic device, and a storage medium. The antenna control method includes that application environment information, network combination parameter information of a connection base station, and antenna state information corresponding to at least one antenna are acquired, that an antenna control scheme is determined according to the antenna state information, the network combination parameter information, and the application environment information, and that the at least one antenna is controlled according to the antenna control scheme.

## Description

### TECHNICAL FIELD

The present application relates to the field of radio communication technology, for example, an antenna control method, an electronic device, and a storage medium.

### BACKGROUND

With the development and evolution of the 5th generation mobile communication technology (5G) terminals, systems and frequency bands of mobile phones increase gradually. The number of new radio (NR) antennas also increases. However, with an increase of the number of antennas, the efficiency allocation of each antenna lowers. The NR part of a 5G terminal generally adopts 4*4 multiple-input multiple-output (MIMO) antennas. Different numbers of antennas are used in different networking manners. Positions and functional attributes of the used NR antennas are generally fixed. 5G terminals have the problems of unbalanced antenna efficiency and poor flexibility in different applications and networking manners, affecting the communication quality of terminals.

### SUMMARY

The present application provides an antenna control method, an electronic device, and a storage medium to implement the flexible control of antennas and improve the balancing degree of antenna efficiency, and thereby reduce the effect of the antennas on the communication quality of a terminal.

The present application provides an antenna control method. The method includes that application environment information, network combination parameter information of a connection base station, and antenna state information corresponding to at least one antenna are acquired, that an antenna control scheme is determined according to the antenna state information, the network combination parameter information, and the application environment information, and that the at least one antenna is controlled according to the antenna control scheme.

The present application further provides an electronic device. The electronic device includes one or more processors and a memory configured to store one or more programs. When executed by the one or more processors, the one or more programs cause the one or more processors to perform the preceding antenna control method.

The present application further provides a computer-readable storage medium for storing one or more programs. When the one or more programs are executed a processor, the preceding antenna control method is performed.

### BRIEF DESCRIPTION OF DRAWINGS

FIG. 1 is a diagram of the antenna distribution of a 5G terminal in the related art.
FIG. 2 is a flowchart of an antenna control method according to an embodiment of the present application.
FIG. 3 is a flowchart of another antenna control method according to an embodiment of the present application.
FIG. 4 is an example diagram of antenna state information collection according to an embodiment of the present application.
FIG. 5 is an example diagram of application environment information detection according to an embodiment of the present application.
FIG. 6 is an example diagram of main antenna switching according to an embodiment of the present application.
FIG. 7 is an example diagram of auxiliary antenna switching according to an embodiment of the present application.
FIG. 8 is a preset example diagram of antenna configuration according to an embodiment of the present application.
FIG. 9 is a structural diagram of an antenna control apparatus according to an embodiment of the present application.
FIG. 10 is an example diagram of an antenna control apparatus according to an embodiment of the present application.
FIG. 11 is an example diagram of an antenna structure according to an embodiment of the present application.
FIG. 12 is a circuit diagram of antenna connection according to an embodiment of the present application.
FIG. 13 is a structural diagram of an electronic device according to an embodiment of the present application.

### DETAILED DESCRIPTION

The embodiments described herein are intended to explain the present application.

Suffixes such as "module", "component", or "unit" used for indicating elements in the subsequent description are used merely for facilitating the description of the present application and have no particular meaning in themselves. Therefore, "module", "component", or "unit" may be used in a mixed manner.

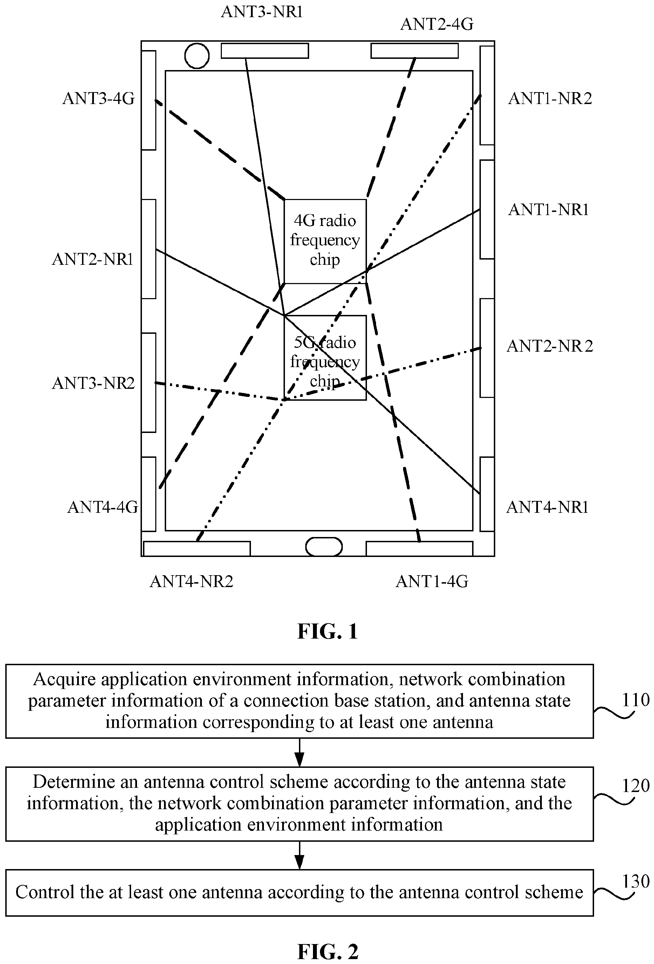

With the development and evolution of 5G terminals, systems of mobile phones and frequency bands of mobile phones increase gradually. The number of NR antennas also increases. With an increase of the number of terminal antennas, the efficiency allocation of each antenna lowers. The NR part of a 5G terminal generally adopts 4*4 MIMO antennas. In the case of a non-stand alone (NSA) mode, 5 to 6 antennas may be provided. In the case of a stand alone (SA) mode, 2 to 4 antennas may be provided. The positions and functional attributes of these NR antennas are generally fixed, resulting in a decrease in call quality and failure to meet 5G requirements. Regarding this problem, the present application mainly solves the problem of unbalanced efficiency and poor flexibility of of antennas of current 5G terminals in different applications and combinations. FIG. 1 is a diagram of the antenna distribution of a 5G terminal in the related art. Referring to FIG. 1, each of a 4G radio frequency chip and a 5G radio frequency chip has a corresponding antenna. One of the factors for the uplink and downlink throughput resources able to be obtained by the terminal depends on the total radiated power (TRP), total isotropic sensitivity (TIS), board conduction power and sensitivity of multiple MIMO antennas as well as external and internal interference. If some of these N antennas are inefficient, the performance of over-the-air technology (OTA) may be affected, and poor signal values may be reported. In this case, a base station may misevaluate the channel quality of each antenna channel, thereby providing relatively low resource scheduling.

Firstly, 5G terminal antennas have the problem of poor flexibility in different network combinations. A mobile phone is relatively far away from the base station in weak signals. The terminal may transmit signals to the base station at the maximum transmission power. Some antennas in evolved universal terrestrial radio access (EUTRA) NR dual-connectivity (ENDC) are antennas A with high efficiency. Some antennas in the ENDC combination are antennas B with low efficiency. The total power actually radiated to the base station may be lower than expected, which may affect the connection between SA and NSA and may affect the scheduling evaluation of the base station. Therefore, the maximum downlink throughput resources allocated by the base station to the mobile phone may be very low, thereby resulting in the Internet access rate of a user unable to meet requirements. Moreover, a long term evolution (LTE) anchor signal is required to be strong sometimes and an NR 5G signal is required to be strong sometimes in different ENDC combinations and NR carrier aggregation (CA) combinations. How to switch between NR antennas and LTE antennas freely, that is, how to take LTE antennas as NR antennas and how to take LTE antennas as NR antennas, has become a problem to be solved.

Secondly, the NR of one frequency band is only able to be switched between four MIMO antennas. If one or more of the four antennas are inefficient, or if one or more of the four antennas are inefficient due to interference or influence in some application scenarios and ENDC combinations. Since the number of four antennas is fixed and single, the maximum efficiency cannot meet requirements. The antennas cannot be dynamically expanded in a wider range, which cannot meet user requirements.

Thirdly, the diversities and MIMO antenna positions of the 5G terminal are relatively fixed, and the distribution and setting of a diversity antenna, a primary receive MIMO (PRXMIMO) antenna and a diversity receive MIMO (DRXMIMO) antenna are also relatively fixed. The efficiency of different auxiliary antennas may vary greatly, For example, the efficiency of an auxiliary MIMO antenna is higher than the efficiency of a diversity antenna or even higher than the efficiency of the main antenna, which leads to the problem of inflexible configuration. How to make 5G NR auxiliary antennas be replaced with each other and configured has become a problem to be solved.

Finally, 5G MIMO antennas have problems of poor isolation, large correlation coefficient or imbalance, which affect the overall throughput rate of the terminal. Under one condition, antenna positions are relatively fixed, which leads to a failure in targeted adjustment and affects NR integrity.

The present application aims to implement the dynamic expansion adjustment of antennas and improve the communication quality and performance of 5G terminals.

FIG. 2 is a flowchart of an antenna control method according to an embodiment of the present application. The embodiment of the present application may be applied to the case of dynamically adjusting terminal antennas. The method may be performed by an antenna control apparatus in an embodiment of the present application. The apparatus may be implemented in software and/or hardware and generally integrated in a communication terminal. Referring to FIG. 2, the method provided in the embodiment of the present application includes the steps below.

In 110, application environment information, network combination parameter information of a connection base station, and antenna state information corresponding to at least one antenna are acquired.

An antenna may be an apparatus configured to transmit or receive a radio frequency signal. One or more antennas may be provided. The network combination parameter information may be the information for identifying the frequency band of a radio frequency signal used by a terminal. The antenna state information may be used to indicate the state of each antenna. Each antenna may have corresponding antenna state information including the signal strength and interference parameter of the corresponding antenna. The network combination parameter information may include the parameter information of one or more frequency bands. The network combination parameter information may be used to determine the type of an antenna used by the communication terminal. The application environment information may be the use environment information of the communication terminal. The application environment information may include software application environment information being used in the communication terminal and physical environment information of the communication terminal.

The antenna state information of each antenna may be collected separately. The collection mode may include reading the log record of each antenna or reading the signal strength and interference parameter under each antenna path to serve as the corresponding antenna state information. Network combination parameters of the connection base station registered by the communication terminal may also be collected, which may include collecting the frequency band information or frequency band combination information of the registered connection. The application environment of the communication terminal may be collected to acquire the application environment information, which may include collecting a software interface of the communication terminal to acquire application software information and collecting the physical environment information of the communication terminal.

In 120, an antenna control scheme is determined according to the antenna state information, the network combination parameter information, and the application environment information.

One or more of the antenna state information, the network combination parameter information, or the application environment information may be analyzed to determine a factor affecting the antenna performance of the communication terminal. The corresponding antenna control scheme may be generated according to the factor. The factor may be the information reflecting the current capability state of the communication terminal or the information reflecting the expected capability state of the communication terminal. For example, when it is determined according to the antenna state information, the network combination parameter information, and the application environment information that the communication terminal has high requirements for uplink transmission performance, an antenna control scheme for controlling a main antenna may be generated to improve the performance of the main antenna.

In 130, the at least one antenna is controlled according to the antenna control scheme.

In the embodiment of the present application, the communication terminal may control, according to the antenna control scheme, the at least one antenna whose antenna state information is collected so as to change the performance of one or more antennas. One or more antenna control schemes may be provided. Multiple antenna control schemes may be executed in sequence, thereby implementing the control of the at least one antenna. The generated multiple antenna control schemes may control different antennas or the same antenna. Dynamic antenna adjustment can be implemented to improve a balance in the performance of different antennas.

In the embodiment of the present application, the application environment information of the at least one antenna, the network combination parameter information of the connection base station and the antenna state information are collected. The antenna control scheme is generated based on the collected information. The at least one antenna is adjusted according to the antenna control scheme. Dynamic antenna adjustment is implemented through the antenna control scheme, thereby improving the balancing degree of antenna efficiency in the case of multiple antennas and enhancing the communication signal quality of a terminal.

On the basis of the preceding embodiment of the present application, the antenna state information includes at least signal strength and an interference parameter.

In the embodiment of the present application, the communication terminal may collect the signal strength, the interference parameter, and transceiving channel performance parameter of each antenna to serve as the antenna state information. The signal strength may include reference signal receiving power (RSRP), received signal strength indication (RSSI) value, and signal noise ratio (SNR). Receiving channel performance parameter may include, for example, throughput rate, error rate, and rank number.

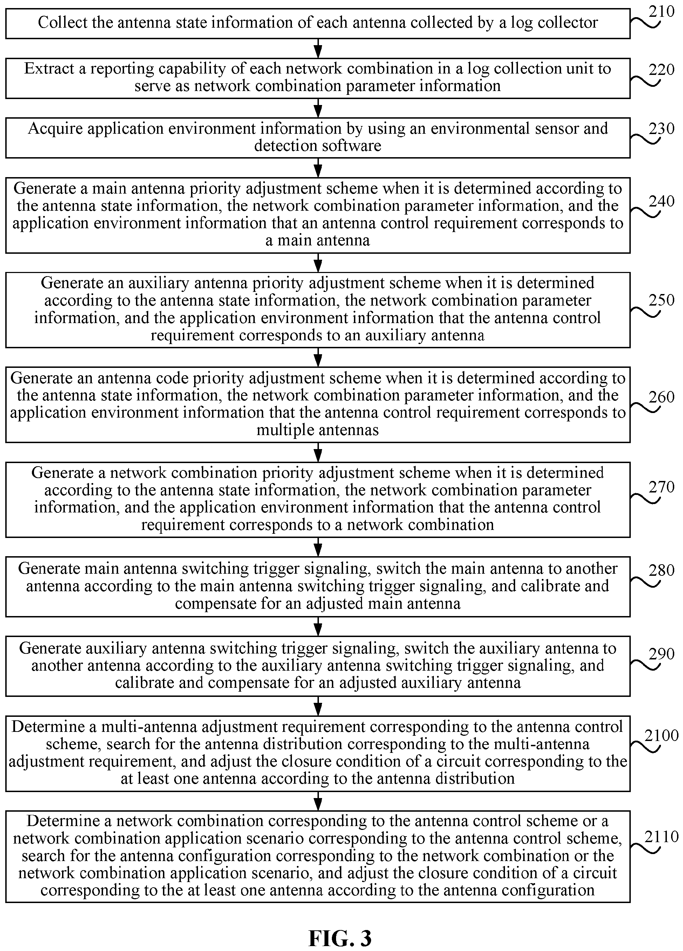

FIG. 3 is a flowchart of another antenna control method according to an embodiment of the present application. The embodiment of the present application is described based on the preceding embodiment of the present application. Referring to FIG. 3, the method provided in the embodiment of the present application includes the steps below.

In 210, the antenna state information of each antenna collected by a log collector is collected.

The log collector may be an apparatus for collecting log files and may read the log files of antennas.

In the embodiment of the present application, the log collector may be used to read the log files and acquire the antenna state information corresponding to each antenna. The collection mode using the log collector may include real-time collection or timing collection of the log files. After obtaining the antenna state information, the correspondence relationship between each piece of antenna state information and a corresponding antenna may be established.

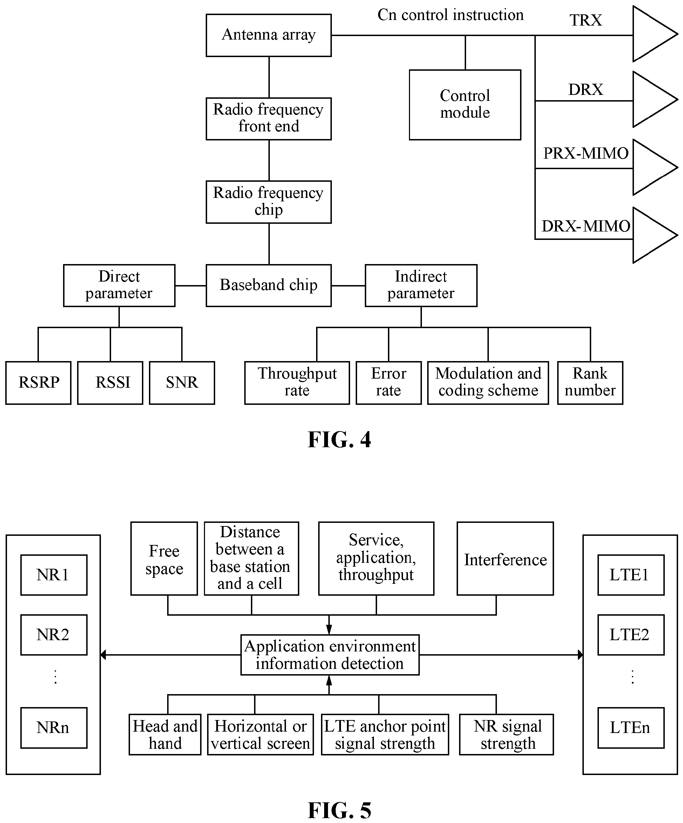

Exemplarily, FIG. 4 is an example diagram of antenna state information collection according to an embodiment of the present application. Referring to FIG. 4, in the embodiment of the present application, direct parameters of each antenna, including the RSRP, RSSI and SNR of each antenna, and indirect parameters of each antenna, including the throughput value, error rate, modulation and coding scheme (MCS) and rank number of each antenna, may be collected by the log collector. The log collector acquires the preceding direct parameters and indirect parameters by grabbing each reported value uploaded by each antenna to a control plane module. Each reported value may be associated with each antenna. In addition to the total combination correspondence relationship, the correspondence relationship between each MIMO antenna and each preceding reported value may also be determined. Accordingly, antenna state parameters of four paths, that is, the transmit and receive (TRX) path, the DRX path, the PRX-MIMO path, and the DRX-MIMO path, are determined.

In 220, a reporting capability of each network combination in a log collection unit is extracted to serve as the network combination parameter information.

The log collection unit may be a unit configured to collect the reporting capability of a communication terminal. The reporting capability may include a frequency band used for communication.

The communication terminal may use the log collection unit to extract the reporting capability for registration and connection to a base station. The reporting capability may include a frequency band used by a combined network. The extracted reporting capability may be used as the network combination parameter information.

In 230, the application environment information is acquired by using an environmental sensor and detection software, where the application environment information is used for indicating a use state of a terminal, and the use state includes internal application environment and external use environment.

The environmental sensor may be an apparatus mounted in a communication device and configured to sense surrounding environment and may include one or more of a synthetic aperture radar (SAR), a proximity sensor, a photosensitive sensor, or a tri-axial sensor. The detection software may be a software apparatus for detecting the application software usage of the communication terminal. The detection software may detect a underlying interface of the communication terminal to acquire a parameter used by the communication terminal. For example, the detection software may be flow detection software which may detect a flow used by the communication terminal. The application environment information may be the use state of the terminal, including the external obstacle state and the use state of the communication terminal. The internal application environment may be the use state of an application program in the communication terminal, including flow requirements and data throughput.

In the embodiment of the present application, the environmental sensor and the detection software may be used to detect the environment of the communication terminal and the software used by the communication terminal respectively to acquire the application environment information.

Exemplarily, FIG. 5 is an example diagram of application environment information detection according to an embodiment of the present application. Referring to FIG. 5, in the embodiment of the present application, the communication terminal may collect parameters of a software application scenario, a surrounding environment scenario and a user service requirement scenario. For example, the configuration information of an NR MIMO antenna may be collected. The configuration information includes positions of main and auxiliary antennas, the number of antennas, and the serial number of antenna codes, which may be used for the communication terminal to perform a customized control on the antennas based on an application scenario. Different NR MIMO antenna states and positions may be configured according to the detection and input of different application scenarios, thereby improving antenna efficiency. The collected application environment information may be divided into parts such as application scenario requirements and external scenario requirements. The application scenario requirements may include downlink throughput peak requirements, uplink throughput peak requirements, uplink total radiated power, downlink TIS strong requirements, MIMO RSRP balanced requirements, and 5G voice over new radio (VONR) non-lagging requirements. The external scenario requirements include terminal hand-held scenario requirements including left-and-right hand-held scenario requirements, free space placement scenario requirements, and left-and-right head proximity scenario requirements; screen display requirements including vertical screen scenario requirements and horizontal screen scenario requirements; base station distance requirements including base station staying-away scenario requirements and base station proximity scenario requirements; LTE anchor strength requirements including strong LTE anchor strength requirements, weak LTE anchor strength requirements, and interference suppression requirements. The detection of the application scenario requirements and the detection of the external scenario requirements may be acquired through the joint detection of the environmental sensor and the detection software.

In 240, a main antenna priority adjustment scheme is generated when it is determined according to the antenna state information, the network combination parameter information, and the application environment information that an antenna control requirement corresponds to a main antenna.

The antenna state information, the combination parameter information, and the application environment information may be counted and extracted to determine that a main factor for the need of antenna control is the main antenna. For example, when it is determined that the current communication terminal has high requirements for uplink transmission performance or that the efficiency of the main antenna is far lower than the efficiency of other antennas, it may be determined that antenna control requirement corresponds to the main antenna.

In 250, an auxiliary antenna priority adjustment scheme is generated when it is determined according to the antenna state information, the network combination parameter information, and the application environment information that the antenna control requirement corresponds to an auxiliary antenna.

In the embodiment of the present application, the antenna state information, the network combination parameter information, and the application environment information may be counted and extracted to determine that a main factor for the need of antenna control is the auxiliary antenna. For example, when it is determined that the performance of the auxiliary antenna has shortcomings or that the auxiliary antenna does not meet service requirements, it is determined that antenna control requirement corresponds to the auxiliary antenna.

In 260, an antenna code priority adjustment scheme is generated when it is determined according to the antenna state information, the network combination parameter information, and the application environment information that the antenna control requirement corresponds to multiple antennas.

After the antenna state information, the network combination parameter information, and the application environment information are counted and extracted, it is determined that a main factor for the need of antenna control is the performance imbalance among multiple antennas. Then it is determined that antenna control requirement corresponds to multiple antennas.

In 270, a network combination priority adjustment scheme is generated when it is determined according to the antenna state information, the network combination parameter information, and the application environment information that the antenna control requirement corresponds to a network combination.

After the antenna state information, the network combination parameter information, and the application environment information are analyzed and extracted, it is determined that the selected antenna combination affects the capability of the communication terminal. A service with high communication quality requirements is allocated with an inefficient LTE anchor point and NR antenna. Then it is determined that the antenna control requirement corresponds to the network combination, and the network combination priority adjustment scheme may be generated.

In 280, main antenna switching trigger signaling is generated; the main antenna is switched to another antenna according to the main antenna switching trigger signaling; and an adjusted main antenna is calibrated and compensated for.

The main antenna switching trigger signaling may be the signaling used by the communication terminal to trigger main antenna switching and may control the on and off of a circuit where the main antenna is located to change.

When the main antenna priority adjustment scheme is generated, the main antenna switching trigger signaling may be generated according to the scheme. The main antenna switching trigger signaling is sent to the circuit where the main antenna is located to control the on and off of the circuit to change, so that the main antenna is switched to another antenna. After main antenna switching is completed, the main antenna after switching may be calibrated and compensated for to guarantee the performance of the main antenna.

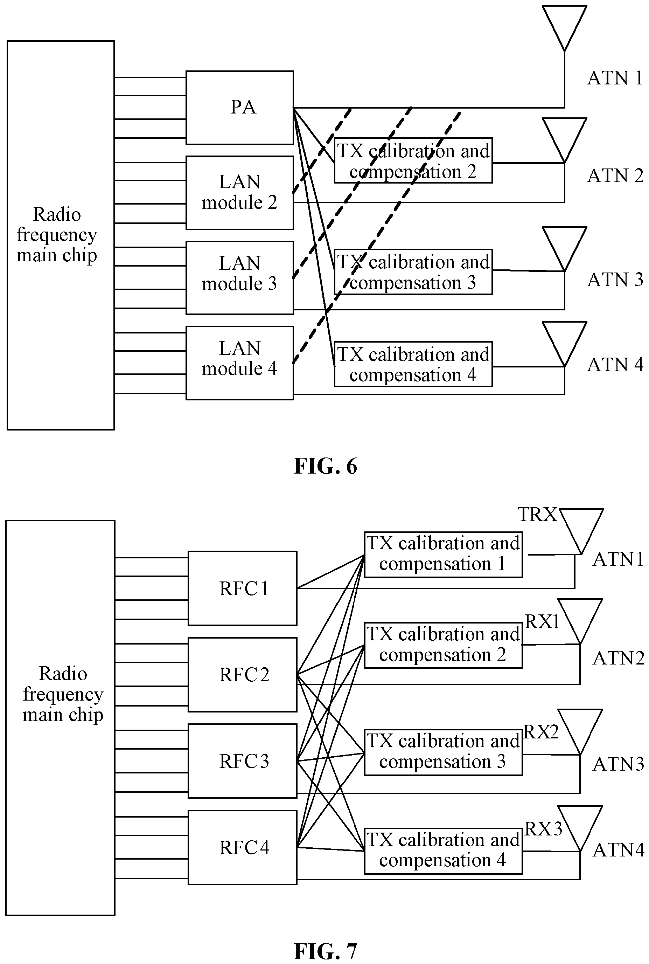

Exemplarily, FIG. 6 is an example diagram of main antenna switching according to an embodiment of the present application. Referring to FIG. 6, in the embodiment of the present application, the main antenna and other multiple antennas are connected through the improvement of radio frequency circuits, implementing the dynamic adjustment configuration of the main antenna in a wider range. Moreover, aiming at the problem of power imbalance in calibrating only the default main TRX antenna, transmit (TX)-based calibration configuration is performed on each antenna. Calibration data of different antennas are configured in a parameter storage module for real-time calling. The configuration of the main antenna may be as below.

NR MIMO antenna distribution is as follows: ANT1 (main antenna), ANT2 (auxiliary antenna), ANT3 (PRXMIMO), ANT4 (DRXMIMO). NRMIMO antenna distribution is as follows: ANT1 (auxiliary antenna), ANT2 (main antenna), ANT3 (PRXMIMO), and ANT4 (DRXMIMO). NR MIMO antenna distribution is as follows: ANT1 (PRXMIMO), ANT2 (auxiliary antenna), ANT3 (main antenna), and ANT4 (DRXMIMO). NRMIMO antenna distribution is as follows: ANT1 (DRXMIMO), ANT2 (auxiliary antenna), ANT3 (PRXMIMO), and ANT4 (main antenna).

In 290, auxiliary antenna switching trigger signaling is generated; the auxiliary antenna is switched to another antenna according to the auxiliary antenna switching trigger signaling; and an adjusted auxiliary antenna is calibrated and compensated for.

In the embodiment of the present application, when it is determined that the generated antenna control scheme is the auxiliary antenna priority adjustment scheme, the auxiliary antenna switching trigger signaling may be generated. The auxiliary antenna switching trigger signaling is sent to a circuit where the auxiliary antenna is located to change the on-and-off condition of the circuit of the antenna so that another antenna serves as a new auxiliary antenna. As with main antenna switching, the auxiliary antenna after auxiliary antenna switching may be calibrated and compensated for to improve the accuracy of the auxiliary antenna.

Exemplarily, FIG. 7 is an example diagram of auxiliary antenna switching according to an embodiment of the present application. Referring to FIG. 7, before delivery, the communication terminal may collect the receive (RX) calibration and compensation value of each signal path. The RX calibration and compensation value may reflect the sensitivity of antenna transmission. Before delivery, a communication device may collect the antenna efficiency value of each frequency point corresponding to each antenna. The antenna efficiency value of each antenna may reflect the current state of each antenna. After the generation of the auxiliary antenna priority adjustment scheme is determined, the auxiliary antenna may be adjusted and controlled. The position of the auxiliary antenna among communication terminal antennas may be switched through the auxiliary antenna switching trigger signaling. After the auxiliary antenna is adjusted to a corresponding new position, the module may call stored RX calibration and compensation values to calibrate the auxiliary antenna. RX calibration parameters of different auxiliary antennas may be pre-stored and called in real time when in use. The configuration of the auxiliary antenna may be as below.

NR MIMO antenna distribution is as follows: ANT1 (main antenna), ANT2 (auxiliary antenna), ANT3 (PRXMIMO), and ANT4 (DRXMIMO). NRMIMO antenna distribution is as follows: ANT1 (auxiliary antenna), ANT2 (main antenna), ANT3 (PRXMIMO), and ANT4 (DRXMIMO). NR MIMO antenna distribution is as follows: ANT1 (main antenna), ANT2 (PRXMIMO), ANT3 (auxiliary antenna), and ANT4 (DRXMIMO). NRMIMO antenna distribution is as follows: ANT1 (main antenna), ANT2 (DRXMIMO), ANT3 (PRXMIMO), and ANT4 (auxiliary antenna).

In 2100, a multi-antenna adjustment requirement corresponding to the antenna control scheme is determined, where the multi-antenna adjustment requirement includes at least an over-the-air download performance requirement, a throughput requirement, an interference requirement, an anti-interference and error code requirement, and a call and network requirement; the antenna distribution corresponding to the multi-antenna adjustment requirement is searched for; and the closure condition of a circuit corresponding to the at least one antenna is adjusted according to the antenna distribution.

The multi-antenna adjustment requirement may be service scenario requirement to be met by adjusting the network combination of multiple antennas. The multi-antenna adjustment requirement may include one or more of an over-the-air download performance requirement, a throughput requirement, interference requirement, an anti-interference and error code requirement, or a call and network requirement. Different types of antenna adjustment requirements correspond to different numbers and types of antennas, and the corresponding distribution of antennas in the communication terminal may also be different. Antenna distribution may be the combined usage of multiple antennas in the communication terminal. Different types of antenna distribution may correspond to different types of multi-antenna adjustment requirements. Different types of antenna distribution and multi-antenna adjustment requirements may be associated and stored in a data table or a configuration file.

The type of the multi-antenna adjustment requirement may be determined according to the antenna control scheme. The type may be one or more of the over-the-air download performance requirement, the throughput requirement, the interference requirement, the anti-interference and error code requirement, or the call and network requirement. Corresponding antenna distribution is selected according to the determined type so that the network combination corresponding to multiple antennas is adjusted according to the antennas to implement the multi-antenna adjustment requirement.

In an exemplary embodiment, more than ten antennas are provided in the communication device. When the number of antennas is relatively large, up to 16 antennas may be provided. For ease of management, each antenna has its own code, such as ANT1, ANT2, ANT3, and ANT4. One NR frequency band commonly used may call one to four antennas. Frequency band N41 is taken as an example. TRX, DRX, PRXMIMO, and DRXMIMO correspond to ANT1, ANT2, ANT3 and ANT4 respectively. Affected by application scenarios or ENDC combinations, the combination of these four antennas may not be optimal and needs to be adjusted as ANT3, ANT4, ANT1, and ANT2. That is, the PRXMIMO/DRXMIMO antenna and the TRX/DRX antenna are interchanged. The preceding two groups of antennas need to be re-encoded and ordered to be in charge of corresponding requirements. Multiple radio frequency conduction paths and multiple antenna paths in the communication device communicate with each other through a multiple-in multiple-out switch, such as a 4-pole 4-throw (4P4T) switch, a 3P3T switch, a double-pole double-throw (DPDT) switch, a single-pole 3-throw (SP3T) switch, or a single-pole double-throw (SPDT) switch, so that multiple MIMO antennas of NR are able to be switched to each other and redefined. A corresponding type of antenna distribution may be selected according to one or more of the over-the-air download performance requirement, the throughput requirement, the interference requirement, the anti-interference and error code requirement, or the call and network requirement so as to implement the adjustment of antenna codes.

For the OTA performance requirement, the adjustment of antenna codes may be performed according to the table below.

| Antenna No. | Corresponding Scenario | Antenna Distribution | Total TRP |
|---|---|---|---|
| Antenna code 1 | Scenario 1 | A1A2A3A4 | TRP1 |
| Antenna code 2 | Scenario 2 | A1A2A4A3 | TRP2 |
| Antenna code 3 | Scenario 3 | A1A3A2A4 | TRP3 |
| Antenna code 4 | Scenario 4 | A1A3A4A2 | TRP4 |
| Antenna No. | Corresponding Scenario | Antenna Distribution | Total TIS |
| Antenna code 5 | Scenario 5 | A1A4A2A3 | TIS1 |
| Antenna code 6 | Scenario 6 | A1A4A3A2 | TIS2 |
| Antenna code 7 | Scenario 7 | A2A1A3A4 | TIS3 |
| Antenna code 8 | Scenario 8 | A2A1A4A3 | TIS4 |

For the throughput requirement, the adjustment of antenna codes may be performed according to the table below.

| Antenna No. | Corresponding Scenario | Antenna Distribution | Uplink Throughput |
|---|---|---|---|
| Antenna code 9 | Scenario 9 | A2A3A4A1 | Thru 1 |
| Antenna code 10 | Scenario 10 | A2A3A1A4 | Thru2 |
| Antenna code 11 | Scenario 11 | A2A4A1A3 | Thru3 |
| Antenna code 12 | Scenario 12 | A2A4A3A1 | Thru4 |
| Antenna No. | Corresponding Scenario | Antenna Distribution | Downlink Throughput |
| Antenna code 13 | Scenario 13 | A3A1A2A4 | Thru5 |
| Antenna code 14 | Scenario 14 | A3A1A4A2 | Thru6 |
| Antenna code 15 | Scenario 15 | A3A2A1A4 | Thru7 |
| Antenna code 16 | Scenario 16 | A3A2A4A1 | Thru8 |

For the anti-interference and error code requirement, the adjustment of antenna codes may be performed according to the table below.

| Antenna No. | Corresponding Scenario | Antenna Distribution | Total block error rate (Bler) |
|---|---|---|---|
| Antenna code 13 | Scenario 17 | A3A4A1A2 | Bler1 |
| Antenna code 14 | Scenario 18 | A3A4A2A1 | Bler2 |
| Antenna code 15 | Scenario 19 | A4A1A2A3 | Bler3 |
| Antenna code 16 | Scenario 20 | A4A1A3A2 | Bler4 |
| Antenna No. | Corresponding Scenario | Antenna Distribution | Total error rate |
| Antenna code 13 | Scenario 21 | A4A2A3A1 | SNR1 |
| Antenna code 14 | Scenario 22 | A4A2A1A3 | SNR2 |
| Antenna code 15 | Scenario 23 | A4A3A1A2 | SNR3 |
| Antenna code 16 | Scenario 24 | A4A3A2A1 | SNR4 |

For the call and network requirement, the adjustment of antenna codes may be performed according to the table below.

| Antenna No. | Corresponding Scenario | Antenna Distribution | Connection Quality |
|---|---|---|---|
| Antenna code 13 | Scenario 17 | A2A1A3A4 | Uplink priority |
| Antenna code 14 | Scenario 18 | A3A2A1A4 | Downlink priority |
| Antenna code 15 | Scenario 19 | A1A2A3A4 | Uplink and downlink balance |
| Antenna No. | Corresponding Scenario | Antenna Distribution | Cell strength |
| Antenna code 13 | Scenario 21 | A2A3A1A4 | Strong-signal cell |
| Antenna code 14 | Scenario 22 | A3A1A2A4 | Medium-signal cell |
| Antenna code 15 | Scenario 23 | A1A2A3A4 | Weak-signal cell |

The OTA and state performance of each antenna code combination have been measured with a basic model value before delivery. Then real-time collection and online calculation are performed in the existing network environment, and the second accurate weighted calculation is performed. Finally-decided antenna coding parameters are combined for matching or reorganized through actual measurement and simulation algorithms. If the environment changes, fine-tuning may be performed in real time according to the collected value of the antenna state. A branch antenna in each antenna combination is fine-tuned or other antenna angle combinations are re-calculated and re-selected until the best communication state, such as the highest upload throughput peak and download throughput peak, is reached.

In 2110, a network combination corresponding to the antenna control scheme or a network combination application scenario corresponding to the antenna control scheme is determined; the antenna configuration corresponding to the network combination or the network combination application scenario is searched for; and the closure condition of a circuit corresponding to the at least one antenna is adjusted according to the antenna configuration.

The antenna configuration may be the information for configuring antenna resources and may include a radio frequency configuration parameter and a radio frequency driving control configuration parameter. The antenna configuration may correspond to the network combination or the network combination application scenario.

The network combination to be used or the network combination application scenario to be used may be determined according to the antenna control scheme. The corresponding antenna configuration may be selected according to the network combination or the network combination application scenario, and antenna adjustment may be performed according to the antenna configuration. For example, a preset antenna configuration manner may be as below.

Different types of antenna configuration may be set regarding different network combination application scenarios: SA frequency band scenario 1: antenna configuration 1; SA frequency band scenario 2: antenna configuration 2; NR CA scenario combination 1: antenna configuration 3; NR CA scenario combination 2: antenna configuration 4; EDNC scenario combination 1: antenna configuration 5; EDNC scenario combination 2: antenna configuration 6; CA + EDNC scenario combination 1: antenna configuration 7; CA + EDNC scenario combination 2: antenna configuration 8; CA + NRCA scenario combination 1: antenna configuration 9; CA + NRCA scenario combination 2: antenna configuration 10; network scenario aggregation frequency band combination n: antenna configuration n.

Alternatively, different types of antenna configuration may be set regarding different network combinations and may be as the table below.

| Network Combination | LTE power (dBm) | NR power (dBm) | Antenna configuration |
|---|---|---|---|
| EDNC1 | 23 | 23 | A1A2A3A4 |
| EDNC2 | 23 | 20 | A1A3A2A4 |
| EDNC3 | 20 | 23 | A2A1A3A4 |
| EDNC4 | 20 | 20 | A2A1A4A3 |
| EDNC5 | 10 | 23 | A3A2A4A1 |
| EDNC6 | 23 | 10 | A3A4A1A2 |
| EDNC7 | 10 | 10 | A4A3A2A1 |
| EDNC8 | 0 | 0 | A4A2A3A1 |

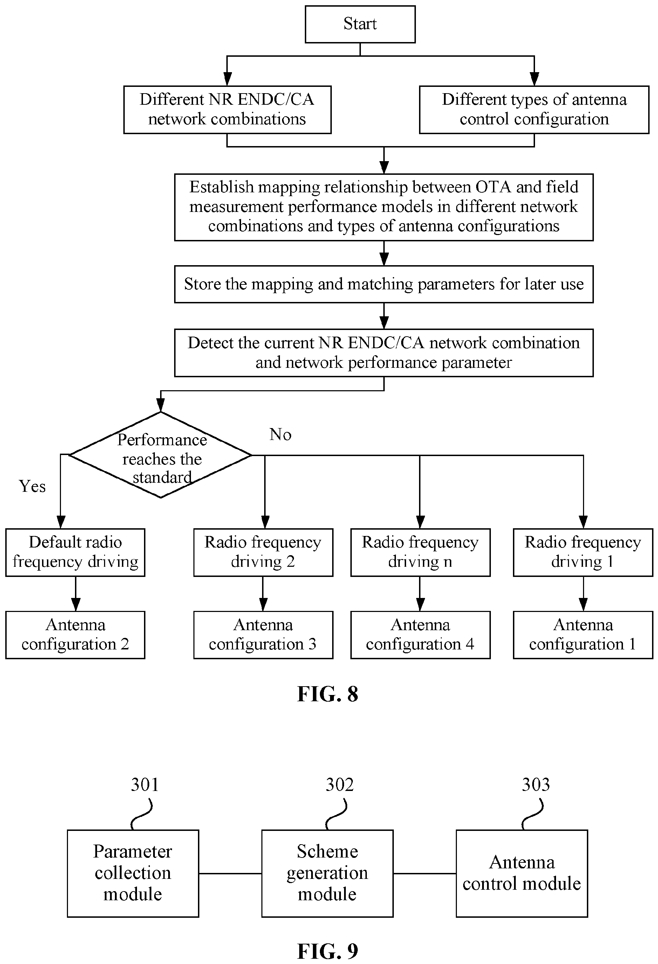

On the basis of the preceding embodiment of the present application, the antenna configuration may be acquired through testing before delivery. Referring to FIG. 8, the acquisition may include the following: In step one, before delivery, the communication terminal tests radio frequency driving configuration under different network combinations and radio frequency driving control configuration under different antenna paths, combinations and divisions of labor; in step two, antenna performance indicators of the communication terminal under different network combinations are collected, and the mapping relationship between the network combinations and the antenna performance indicators is established, where the mapping relationship may be stored in a memory of the communication terminal for use; in step three, calibration and compensation values under different network combinations are written into the communication terminal and are used to complete antenna calibration and compensation before delivery.

When the antenna configuration is used for antenna adjustment, network quality and the network combination may be detected. If the network quality and the network combination do not meet user requirements or self-set requirements, an associated radio frequency driving parameter is called to reconfigure and readjust the antennas. The antennas receive an adjustment indication to implement network combination reconfiguration. The preceding process may be repeated until the antennas are controlled to reach the working mode corresponding to requirements.

In the embodiment of the present application, the antenna state information of each antenna collected by the log collector is collected; the reporting capability of each network combination in the log collection unit is extracted to serve as the network combination parameter information; the application environment information is acquired by using the environmental sensor and the detection software separately; at least one of the main antenna priority adjustment scheme, the auxiliary antenna priority adjustment scheme, the antenna code priority adjustment scheme, or the network combination priority adjustment scheme is determined by using the antenna state information, the network combination parameter information, and the application environment information; the main antenna switching trigger signaling is generated regarding the preceding priority adjustment schemes, main antenna switching is triggered by using the main antenna switching trigger signaling, and the main antenna after switching is calibrated and compensated for; the auxiliary antenna switching trigger signaling is generated, auxiliary antenna switching is triggered by using the auxiliary antenna switching trigger signaling, and the auxiliary antenna after switching is calibrated and compensated for; the multi-antenna adjustment requirement corresponding to the antenna control scheme is determined, the antenna distribution corresponding to the multi-antenna adjustment requirement is searched for, and at least one antenna is adjusted by using the antenna distribution; and the network combination corresponding to the antenna control scheme or the network combination application scenario corresponding to the antenna control scheme is determined, the antenna configuration corresponding to the network combination or the network combination application scenario is searched for, and at least one antenna is adjusted according to the antenna configuration. In this case, dynamic antenna adjustment is implemented, enhancing the degree of adaptation between antennas and the communication terminal and improving network communication quality.

On the basis of the preceding embodiments of the present application, the step in which the reporting capability of each network combination in the log collection unit is extracted to serve as the network combination parameter information includes the steps below.

Registered network information of a current network card is identified to determine a current operator; network combination parameter configuration is detected according to a built-in encrypting file system frequency band and the driving configuration information of the network requirement software of the current operator; an access scan is performed according to the network combination parameter configuration to acquire the reporting capability of each network combination; and the parameter information of the reporting capability of each network combination read by the log collection unit is taken as a network combination parameter.

The current network card may be a software and hardware apparatus used by the communication terminal and configured to implement the network communication function. The registered network information may be the operator information registered in the communication terminal during the use of the current network card and may reflect an operator providing network services. The encrypting file system (EFS) frequency band may be an information component used by the communication terminal to store international mobile equipment identities (IMEI), radio network card addresses, and network settings. The EFS frequency band may be the frequency band information stored through an encrypting file system and may be a frequency band used by the communication terminal for communication. The driving configuration information may be a configuration file used for operating software which may include network parameters used for software operation. The reporting capability may be the communication capability of the communication terminal reporting to the base station and may include, for example, the supported network types and network operators.

The operator information of the network card currently used by the communication terminal may be read to determine the current operator. Information such as the configured network setting and the radio network card address is searched for in the EFS frequency band. The configuration file used by the communication terminal when operating the network requirement software of the current operator is extracted to extract the driving configuration information. The collected information is taken as the network combination parameter configuration. The base station may be accessed according to the network combination parameter configuration. Moreover, the reporting capability of the network combination may be collected during the access process. The parameter information corresponding to the reporting capability may be used as the network combination parameter.

On the basis of the preceding embodiments of the present application, the step in which the application environment information is acquired by using the environmental sensor and the detection software includes the steps below.

The environmental sensor is used to detect an environment parameter of the environment to serve as an application environment parameter, where the environment parameter includes at least an obstacle position and a terminal use state; and traffic statistics software and a modem are used to detect a service application parameter to serve as an application environment parameter, where the service application parameter includes at least system traffic requirements and data throughput.

In the embodiment of the present application, the obstacle position may be the position of an obstacle blocking antenna transmission in the surrounding environment. The terminal use state may be the state in which a user uses the terminal, for example, the horizontal screen is in use or the vertical screen is in use. In order to collect the environmental parameter, the used environmental sensor includes at least one of a synthetic aperture radar (SAR), a proximity sensor, a photosensitive sensor, or a tri-axial sensor. The traffic statistics software and the modem are used to detect the service application parameter to serve as the application environment parameter.

The communication terminal may use the built-in environmental sensor, such as a synthetic aperture radar, a proximity sensor, a photosensitive sensor, or a tri-axial sensor to check the environment where the communication terminal is located to collect an application environment parameter. The communication terminal may also use the mounted traffic statistics software to collect the system traffic requirements and use the modem to collect the data throughput of the communication terminal. The collected system traffic requirements and data throughput may be used as the application environment parameter.

On the basis of the preceding embodiments of the present application, the antenna state information includes at least one of: reference signal receiving power, received signal strength indication, signal noise ratio, throughput value, error rate, modulation and coding scheme, or rank number.

On the basis of the preceding embodiment of the present application, the network combination includes at least one of: a single NR frequency band, a single NSA mode, a single SA mode, the ENDC under single LTE, a multi-LTE CA and ENDC hybrid, or a multi-LTE CA and NR CA hybrid.

The network combination used by the communication terminal may include one or more of the single NSA networking mode, the single SA networking mode, the ENDC under single LTE, or the multi-LTE CA and ENDC hybrid. Exemplarily, the network combination may be as below.
SA frequency band scenario 1: N41
SA frequency band scenario 2: N78
SA frequency band scenario 3: N1
NSA frequency band scenario 4: B3+N41
NSA frequency band 5: B3+N78
ENDC scenario combination 6: B1+N3
ENDC scenario combination 7: B8+N3
NR CA scenario combination 8: N41+N79
NR CA scenario combination 9: N1+N28
LTE 2 component carrier (CC) + ENDC scenario combination 10: B1+B3+N41
LTE 3CC + ENDC scenario combination 11: B1+B3+B7+N78
LTE 1CC + NRCA scenario combination 12: B1+N1+N78
LTE 2CC + NRCA scenario combination 13: B1+B3+N1+N78
LTE 3CC + NRCA scenario combination 14: B1+B3+B28+N3+N78.

FIG. 9 is a structural diagram of an antenna control apparatus according to an embodiment of the present application. The apparatus may perform the method provided in any embodiment of the present application and has function modules and effects corresponding to the method performed. The apparatus may be implemented in software and/or hardware and generally integrated in a communication terminal. Referring to FIG. 9, the apparatus includes a parameter collection module 301, a scheme generation module 302, and an antenna control module 303.

The parameter collection module 301 is configured to acquire application environment information, the network combination parameter information of a connection base station, and the antenna state information corresponding to at least one antenna.

The scheme generation module 302 is configured to determine an antenna control scheme according to the antenna state information, the network combination parameter information, and the application environment information.

The antenna control module 303 is configured to control the at least one antenna according to the antenna control scheme.

In the embodiment of the present application, the parameter collection module 301 collects the application environment information of an antenna, the network combination parameter information of the connection base station, and the corresponding antenna state information. The scheme generation module 302 generates an antenna control scheme based on the collected information. The antenna control module 303 adjusts the antenna according to the antenna control scheme. In this manner, the dynamic adjustment of the antenna is implemented through the antenna control scheme, thereby improving the balancing degree of antenna efficiency in the case of multiple antennas and enhancing the communication signal quality of a terminal.

On the basis of the preceding embodiment of the present application, the antenna state information includes at least signal strength, an interference parameter, and a receiving channel performance parameter.

On the basis of the preceding embodiment of the present application, the parameter collection module 301 includes an antenna state collection unit, a network combination acquisition unit, and an application environment collection unit.

The antenna state collection unit is configured to collect the antenna state information of each antenna collected by a log collector.

The network combination acquisition unit is configured to extract the reporting capability of each network combination in a log collection unit to serve as the network combination parameter information.

The application environment collection unit is configured to acquire the application environment information by using an environmental sensor and detection software, where the application environment information is used for indicating the use state of the terminal, and the use state includes internal application environment and external use environment.

On the basis of the preceding embodiment of the present application, the network combination acquisition unit includes an operator identification unit, a parameter configuration unit, an access scan unit, and a network parameter extraction unit.

The operator identification unit is configured to identify the registered network information of a current network card to determine a current operator.

The parameter configuration unit is configured to detect network combination parameter configuration according to a built-in encrypting file system frequency band and the driving configuration information of the network requirement software of the current operator.

The access scan unit is configured to perform an access scan according to the network combination parameter configuration to acquire the reporting capability of each network combination.

The network parameter extraction unit is configured to take the parameter information of the reporting capability of each network combination read by the log collection unit as a network combination parameter.

On the basis of the preceding embodiment of the present application, the application environment collection unit includes an environment parameter sub-unit and a software parameter sub-unit.

The environment parameter sub-unit is configured to use an environmental sensor to detect an environment parameter of the environment to serve as an application environment parameter, where the environment parameter includes at least an obstacle position and a terminal use state.

The software parameter sub-unit is configured to use traffic statistics software and a modem to detect a service application parameter to serve as an application environment parameter, where the service application parameter includes at least system traffic requirements and data throughput.

On the basis of the preceding embodiment of the present application, the antenna state information includes at least one of: reference signal receiving power, received signal strength indication, signal noise ratio, throughput value, error rate, modulation and coding scheme, or rank number.

On the basis of the preceding embodiment of the present application, the network combination includes at least one of: a single NR frequency band, a single NSA mode, a single SA mode, the ENDC under single LTE, a multi-LTE CA and ENDC hybrid, or a multi-LTE CA and NR CA hybrid.

On the basis of the preceding embodiment of the present application, the scheme generation module 302 includes a main antenna unit, an auxiliary antenna unit, a coding unit, and a combination unit.

The main antenna unit is configured to generate a main antenna priority adjustment scheme in response to determining, according to the antenna state information, the network combination parameter information, and the application environment information, that an antenna control requirement corresponds to a main antenna.

The auxiliary antenna unit is configured to generate an auxiliary antenna priority adjustment scheme in response to determining, according to the antenna state information, the network combination parameter information, and the application environment information, that the antenna control requirement corresponds to an auxiliary antenna.

The coding unit is configured to generate an antenna code priority adjustment scheme in response to determining, according to the antenna state information, the network combination parameter information, and the application environment information, that the antenna control requirement corresponds to multiple antennas.

The combination unit is configured to generate a network combination priority adjustment scheme in response to determining, according to the antenna state information, the network combination parameter information, and the application environment information, that the antenna control requirement corresponds to a network combination.

On the basis of the preceding embodiment of the present application, the antenna control module 303 includes a main antenna adjustment unit configured to generate main antenna switching trigger signaling, switch the main antenna to another antenna according to the main antenna switching trigger signaling, and calibrate and compensate for an adjusted main antenna.

On the basis of the preceding embodiment of the present application, the antenna control module 303 includes an auxiliary antenna adjustment unit configured to generate auxiliary antenna switching trigger signaling, switch the auxiliary antenna to another antenna according to the auxiliary antenna switching trigger signaling, and calibrate and compensate for an adjusted auxiliary antenna.

On the basis of the preceding embodiment of the present application, the antenna control module 303 includes a code adjustment unit configured to determine a multi-antenna adjustment requirement corresponding to the antenna control scheme, where the multi-antenna adjustment requirement includes at least an over-the-air download performance requirement, a throughput requirement, interference requirement, an anti-interference and error code requirement, or a call and network requirement, search for the antenna distribution corresponding to the multi-antenna adjustment requirements, and adjust the closure condition of a circuit corresponding to the at least one antenna according to the antenna distribution.

On the basis of the preceding embodiment of the present application, the antenna control module 303 includes a combination adjustment unit configured to determine a network combination corresponding to the antenna control scheme or a network combination application scenario corresponding to the antenna control scheme, search for the antenna configuration corresponding to the network combination or the network combination application scenario, and adjust the closure condition of a circuit corresponding to the at least one antenna according to the antenna configuration.

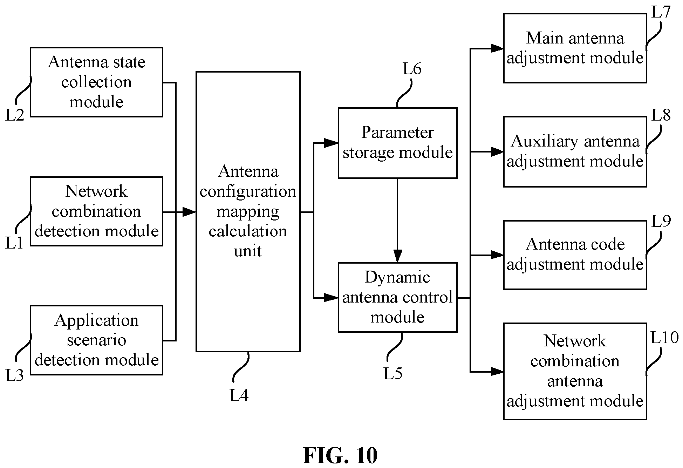

In an exemplary embodiment, FIG. 10 is an example diagram of an antenna control apparatus according to an embodiment of the present application. Referring to FIG. 10, the apparatus provided in the embodiment of the present application includes an antenna state collection module L1, a network combination detection module L2, an application scenario detection module L3, an antenna configuration mapping calculation unit L4, a dynamic antenna control module L5, a parameter storage module L6, a main antenna adjustment module L7, an auxiliary antenna adjustment module L8, an antenna code adjustment module L9, and a network combination antenna adjustment module L10.

The antenna state collection module L1 is connected to the antenna configuration mapping calculation unit L4 and configured to collect the state of each MIMO antenna of a 5G terminal. The state includes the signal strength and interference parameter under each antenna path, for example, RSRP value, RSSI value, and SNR value, or the performance parameter of each antenna receiving channel, for example, throughput rate, error rate, and sounding reference signal (SRS) value. The values of the antenna state collection are collected by a log collector built in a mobile phone to grab each reported value. Different from a traditional reported value, such reported value needs to be associated with an antenna sequence. That is, in addition to the total combination correspondence relationship, it is also necessary to calculate and map the correspondence relationship between each NR MIMO antenna and the preceding parameters, as well as antenna state parameter values of TRX, DRX, PRX-MIMO and DRX-MIMO paths.

The network combination detection module L2 is connected to the antenna configuration mapping calculation unit L4 and configured to collect network combination parameters of the connection base station registered by the 5G terminal. The network combination parameters include a registered and connected NR frequency band, an NSA mode or SA mode, the ENDC under single LTE, a multi-LTE CA and ENDC hybrid, and a multi-LTE CA and NR CA hybrid. The network combination detection module L2 performs the following steps: In step one, the terminal identifies a current network card and registered network information to determine a current operator; in step two, the terminal detects the current NSA/SA/CA/ENDC/NRCA network combination requirement configuration according to a built-in EFS frequency band and the built-in driving configuration information of the network requirement software of the current operator; in step three, the terminal performs an access scan, detects the first combination reporting capability of the terminal, and detects the reporting capability of the currently registered, accessed or connected network; and in step four, the network combination detection module L2 identifies current network combination reporting information through a built-in log collection unit.

The application scenario detection module L3 is connected to the antenna configuration mapping calculation unit L4 and configured to collect a parameter of an application scenario where the terminal is located and a parameter of a surrounding environment scenario and detects user service scenario requirements. The configuration information of an NR MIMO antenna, for example, positions of main and auxiliary antennas, the number of antennas, and the serial number of antenna codes, is customized based on application scenarios. That is, different NR MIMO antenna states and positions are configured according to the detection and input of different application scenarios, improving working gains and efficiency.

The antenna configuration mapping calculation unit L4 is connected to the dynamic antenna control module L5 and configured to configure mapping for antennas in different antenna states and scenarios and calculate and match corresponding adjustment algorithms. The input variables of this module include three types, that is, an antenna state, a network combination and an application scenario. Four output adjustment manners are provided, that is, main antenna adjustment priority, auxiliary antenna adjustment priority, antenna code adjustment priority, and network combination antenna configuration adjustment. How to select and match an adjustment manner and whether to be adjusted through a single mode or multiple modes are uniformly deployed through the antenna configuration mapping calculation unit L4. One-to-one mapping and corresponding matching are performed through antenna numbers, antenna state parameter values and performance parameter values, antenna positions, and MIMO antenna combinations. A built-in algorithm of the antenna configuration mapping calculation unit L4 is to compare and analyze signal quality parameters of different antenna numbers and correlation parameters of combination sequences and call an adjustment manner of one or more combinations with a relatively high priority so that an NR MIMO antenna path can be dynamically adjusted to the direction and sequence with relatively high signal quality, larger throughput rate and more stable speed. Antenna resource configuration is implemented by detecting key parameters. When the current demand for uplink transmission performance is high, the main antenna is adjusted through the main antenna adjustment module L7 to the strongest antenna that can be scanned and switched to. When one current auxiliary antenna has shortcomings, which causes the overall TRP and TIS to fail to meet requirements, auxiliary antenna configuration needs to be adjusted to extend the auxiliary antenna to another antenna with higher efficiency. When the current low throughput is caused by the imbalance of four paths of NR MIMO antennas, antenna code adjustment may be performed to optimize the balance of the four paths. When the current antenna performance is poor due to the fact that an inefficient LTE anchor point and an NR antenna are assigned to the mobile phone in some network combinations, the combination antenna mapping adjustment mode needs to be called to perform redefinition and reconfiguration based on the network combinations.

The dynamic antenna control module L5 is connected to multiple other modules and configured to coordinate a control detection module and a dynamic antenna adjustment module. Dynamic antenna control includes two parts, that is, the expansion control of NR MIMO expansion antennas and module adjustment control on the 5G terminal.

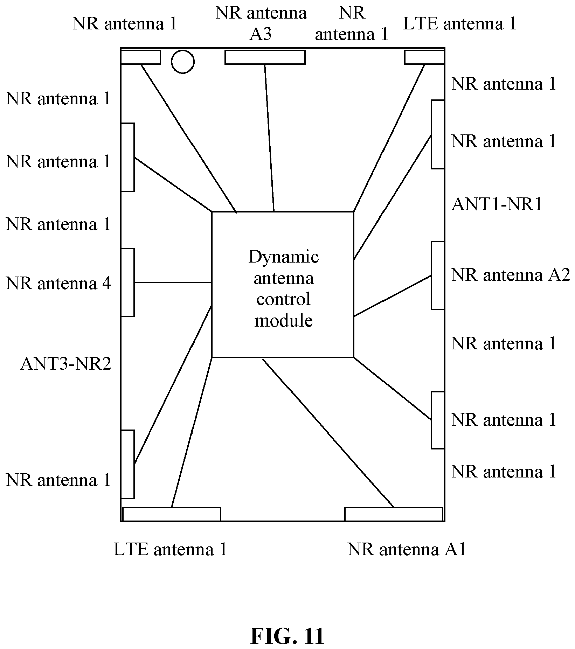

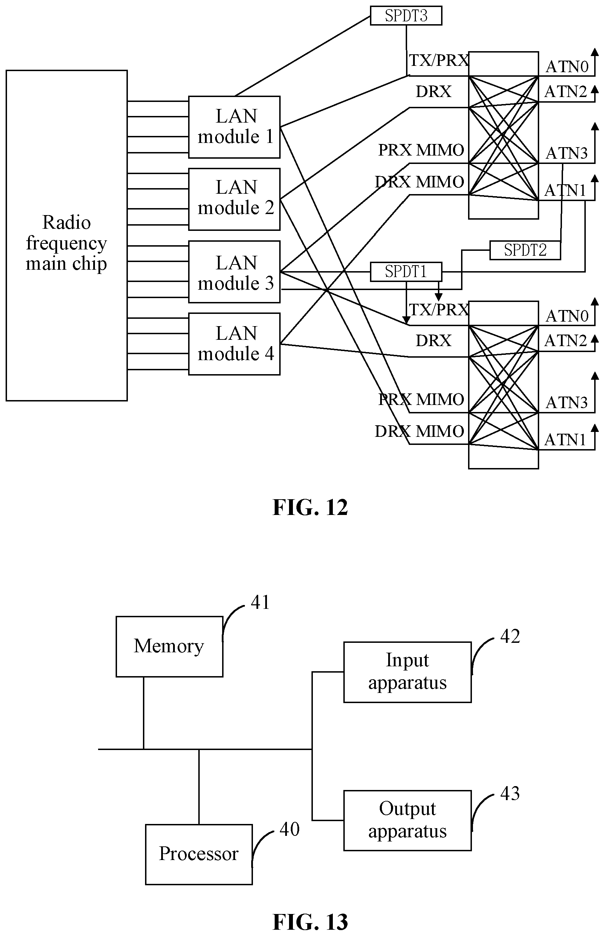

For the control function of the expansion antenna, refer to FIG. 11. The dynamic antenna control module L5 is connected to antennas of the terminal. The 5G antennas on the terminal may be connected in series with each other through, for example, SPDT, SP3T or SPNT switches. For example, in frequency band N3, only four antennas, such as 2, 4, 3, and 6, may be fixed at originally, while antennas 7 and 9 were originally used as N41 antennas. Through the circuit shown in FIG. 12, antennas 7 and 9 are extended to the N3 antenna sequence to expand the adjustment range and coverage of N3 antennas. According to the output result of current antenna configuration mapping, antenna state parameter values, 5G terminal signal quality, and throughput-related parameters, the dynamic antenna control module L5 adaptively modulates and controls four antenna configuration adjustment manners, including main antenna adjustment, auxiliary antenna adjustment, antenna adaptive code adjustment, and network combination matching adjustment. The dynamic antenna control module L5 is configured to perform adaptive dynamic adjustment control according to current network conditions and service requirements. The preceding adjustment methods may be performed one by one, may be combined in pairs, or may be used together in combination until network performance requirements are met. If a single adjustment is selected, judgment is performed according to the sensitivity of key parameters. An adjustment manner and program with high sensitivity correlation are preferentially called until radio call performance, uplink and downlink throughput, and the like meet target requirements.

The main antenna adjustment module L7 is connected to the dynamic antenna control module L5 and configured to adjust and control the configuration of the main antenna of the 5G terminal. In a traditional design, the distribution of the main transceiving antenna, other diversities and MIMO antennas has been set before delivery. Calibration is also only used for the main TRX antenna, while separate transmission calibration is not performed on other diversities and MIMO antennas. In practical applications, performance deteriorates when a user holds the original default antenna in some scenarios, such as a human head and human hand scenario. In the traditional solution, upper and lower antennas of the main antenna are switched. However, if the upper antenna is inefficient, the effect would not be sound even if the upper diversity antenna is switched. Therefore, in the embodiment of the present application, the main antenna and other multiple antennas are connected through the improvement of the radio frequency circuit, implementing the dynamic adjustment and configuration of the main antenna in a wider range. Moreover, aiming at the problem of power imbalance in calibrating only the default main TRX antenna, TX-based calibration configuration is performed on each antenna. Calibration data of different antennas are configured in the parameter storage module L6 for real-time calling.

The auxiliary antenna adjustment module L8 is connected to the dynamic antenna control module L5 and configured to adjust and control the configuration of auxiliary antennas of the 5G terminal. The current diversities and MIMO antenna positions of the 5G terminal are relatively fixed, and the distribution and setting of a diversity antenna, a PRXMIMO antenna and a DRXMIMO antenna are also relatively fixed. The efficiency of different auxiliary antennas may vary greatly. For example, the efficiency of an auxiliary MIMO antenna is higher than the efficiency of a diversity antenna or even higher than the efficiency of the main antenna, which leads to the problem of inflexible configuration. The auxiliary antenna adjustment module L8 enables the 5G NR auxiliary antennas to be replaced and configured according to requirements. The auxiliary antenna adjustment module L8 collects the RX automatic gain control (AGC) value of each signal path before delivery, through which conduction sensitivity may be fed back. Moreover, the auxiliary antenna adjustment module L8 collects the antenna efficiency value of a corresponding frequency point of each antenna, through which the current antenna state is fed back. The self-defined deployment of the auxiliary antennas is performed through the current application scenario, the current network combination situation, and user's network quality requirements. When the auxiliary antennas are adjusted to corresponding new positions, the module calls RX AGC compensation parameters of the new positions to implement accurate RX receiving and reporting. Each auxiliary antenna corresponds to a specific RX calibration parameter. RX calibration parameters of different antennas are disposed in the parameter storage module L6 for real-time calling until target threshold requirements are met.

The antenna code adjustment module L9 is connected to the dynamic antenna control module L5 and configured to adjust and control antenna codes of the 5G terminal. The antenna code adjustment module L9 is mainly in charge of simultaneous re-coding and redefinition of multiple antennas. A single NR antenna needs 2 to 4 MIMO antennas. The total number of 5G terminal antennas is generally more than 10 and up to 16. Each antenna is encoded, such as ANT1, ANT2, ANT3, ANT4, AN5..., and ANT16. 1 to 4 antennas may be called in one conventional NR frequency band. N41 is taken as an example. TRX, DRX, PRXMIMO, and DRXMIMO correspond to ANT1, ANT2, ANT3, and ANT4 respectively. In practical use, affected by application scenarios or ENDC combinations, the combination of these four antennas may not be optimal and needs to be adjusted as ANT3, ANT4, ANT1, and ANT2. That is, the PRXMIMO/DRXMIMO antenna and the TRX/DRX antenna are interchanged. The preceding two groups of antennas need to be re-encoded and ordered to be in charge of corresponding requirements and functions. The antenna code adjustment module L9 enables multiple radio frequency conduction paths of NR and multiple antenna paths to communicate with each other through a multiple-in multiple-out switch, such as a 4P4T switch, a 3P3T switch, a DPDT switch, an SP3T switch, or an SPDT switch, so that multiple MIMO antennas of NR can be switched to each other and redefined. Each antenna combination is specially encoded in the antenna code adjustment module L9 to cope with different scenarios and network requirements. Different types of antenna code position adjustment are performed corresponding to different TRP, TIS, uplink throughput, downlink throughput, total error rates, total SNR values, NR call quality requirements, and cell distances and strengths.

The network combination antenna adjustment module L10 is connected to the dynamic antenna control module L5 and configured for the antenna resource configuration of the 5G terminal in different network combinations and requirements. The reconfiguration here includes two parts, the reconfiguration of radio frequency and antenna circuits and the radio frequency driving control of network combinations. The reconfiguration of radio frequency and antenna circuits implements the interconnection between different frequency bands and antenna branches through multi-channel switching circuits and switches. Through radio frequency driving adaptive control, the circuit path and MIMO antenna configuration in different network combinations can be reconstructed. The method of the radio frequency driving control of network combinations is as follows: In step one, the terminal performs radio frequency driving configuration in different network combinations and radio frequency driving control configuration of different antenna paths, combinations and divisions of labor before delivery; in step two, antenna performance indicators in different network combinations are collected, and a mapping relationship is established and stored in a corresponding parameter memory for calling; in step three, calibration and compensation parameters in different network combinations are written to the terminal to complete calibration and compensation before delivery; in step four, network quality and the network combinations are detected, and relevant radio frequency driving codes are called to perform reconfiguration and adjustment when user requirements and self-setting requirements are not met; and in step five, the antennas receive an adjustment indication, and combination reconfiguration is performed to control the antennas to enter corresponding working modes until target requirements are met. The module configures and calls corresponding NR MIMO antenna branches, combinations and sequences through differential requirements of the network combinations. In a network combination scenario of multiple CA and ENDC or a network combination scenario of multiple CA and NRCA, an LTE anchor point signal is required to be strong sometimes and an NR 5G signal is required to be strong sometimes in different ENDC combinations and NR CA combinations. The module enables NR antennas and LTE antennas to be switched freely. That is, LTE antennas with the same frequency are taken as NR antennas, and LTE antennas with the same frequency are taken as NR antennas. Different types of antenna configuration are performed combining requirements and network conditions.

FIG. 13 is a structural diagram of an electronic device according to an embodiment of the present application. The electronic device includes a processor 70, a memory 41, an input apparatus 42, and an output apparatus 43. One or more processors 40 may be disposed in the electronic device. One processor 40 is taken as an example in FIG. 13. The processor 40, the memory 41, the input apparatus 42, and the output apparatus 13 in the electronic device may be connected by a bus or other modes. The connection through a bus is used as an example in FIG. 13.

As a computer-readable storage medium, the memory 41 may be configured to store software programs, computer-executable programs, and modules, such as modules (the parameter collection module 301, the scheme generation module 302, and the antenna control module 303) corresponding to the antenna control apparatus described in embodiments of the present application. The processor 40 runs the software programs, instructions and modules stored in the memory 41 to perform function applications and data processing of the electronic device, that is, to implement the preceding method.

The memory 41 may include a program storage area and a data storage area, where the program storage area may store an operating system and an application program required by at least one function while the data storage area may store data created according to use of the electronic device. Additionally, the memory 41 may include a high-speed random-access memory and may further include a non-volatile memory, for example, at least one magnetic disk memory, a flash memory, or another non-volatile solid-state memory. In some examples, the memory 41 may include memories which are remotely disposed relative to the processor 40 and these remote memories may be connected to the electronic device via a network. Examples of the preceding network include, but are not limited to, the Internet, an intranet, a local area network, a mobile communication network, and a combination thereof.

The input apparatus 42 may be configured to receive inputted digital or character information and generate key signal input related to user settings and function control of the electronic device. The output apparatus 43 may include a display device, for example, a display screen.

An embodiment of the present application further provides a storage medium including computer-executable instructions, and the computer-executable instructions are used for performing an antenna control method when executed by a computer processor. The method includes the steps below.

Application environment information, the network combination parameter information of a connection base station, and the antenna state information corresponding to at least one antenna are acquired; an antenna control scheme is determined according to the antenna state information, the network combination parameter information, and the application environment information; and the at least one antenna is controlled according to the antenna control scheme.

From the preceding description of the embodiments, the present application may be implemented by means of both software and required general-purpose hardware or by means of hardware. Technical solutions of the present application may be essentially embodied in the form of a software product. The software product in a computer may be stored in a computer-readable storage medium such as a floppy disk, a read-only memory (ROM), a random-access memory (RAM), a flash memory, a hard disk or an optical disc in the computer and includes several instructions for enabling a computer device (which may be a personal computer, a server or a network device) to perform the method of the embodiments of the present application.

Units and modules included in embodiments of the preceding apparatus are divided according to functional logic, and the division is not limited to this as long as the corresponding functions can be implemented. Additionally, the names of function units are merely intended for distinguishing between each other and are not to limit the scope of the present application.

All or part of the steps in the method, and functional modules/units in the system and device disclosed above may be implemented as software, firmware, hardware and appropriate combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As known to those of ordinary skill in the art, the term "the computer storage media" includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Moreover, as known to those of ordinary skill in the art, the communication media generally include computer-readable instructions, data structures, program modules, or other data in carriers or in modulated data signals transported in other transport mechanisms and may include any information delivery medium.

## Claims

1. An antenna control method, comprising:
acquiring application environment information, network combination parameter information of a connection base station, and antenna state information corresponding to at least one antenna;
determining an antenna control scheme according to the antenna state information, the network combination parameter information, and the application environment information; and
controlling the at least one antenna according to the antenna control scheme.

2. The method according to claim 1, wherein acquiring the application environment information, the network combination parameter information of the connection base station, and the antenna state information corresponding to the at least one antenna comprises:
collecting antenna state information of each of the at least one antenna collected by a log collector;
extracting a reporting capability of each network combination in a log collection unit to serve as the network combination parameter information; and
acquiring the application environment information by using an environmental sensor and detection software, wherein the application environment information is used for indicating a use state of a terminal, and the use state comprises internal application environment and external use environment.

3. The method according to claim 2, wherein extracting the reporting capability of the each network combination in the log collection unit to serve as the network combination parameter information comprises:
identifying registered network information of a current network card to determine a current operator;
detecting network combination parameter configuration according to a built-in encrypting file system frequency band and driving configuration information of network requirement software of the current operator;
performing an access scan according to the network combination parameter configuration to acquire the reporting capability of the each network combination; and
taking parameter information of the reporting capability of the each network combination read by the log collection unit as a network combination parameter.

4. The method according to claim 2, wherein acquiring the application environment information by using the environmental sensor and the detection software comprises:
using the environmental sensor to detect an environment parameter of environment to serve as an application environment parameter, wherein the environment parameter comprises at least an obstacle position and a terminal use state; and
using traffic statistics software and a modem to detect a service application parameter to serve as an application environment parameter, wherein the service application parameter comprises at least system traffic requirements and data throughput.

5. The method according to claim 2 or 3, wherein the each network combination comprises at least one of:
a single new radio, NR, frequency band, a single non-stand alone, NSA, mode, a single stand alone, SA, mode, evolved universal terrestrial radio access new radio dual-connectivity, ENDC, under single long term evolution, LTE, a multi-LTE carrier aggregation, CA, and ENDC hybrid, or a multi-LTE CA and NR CA hybrid.

6. The method according to claim 1, wherein determining the antenna control scheme according to the antenna state information, the network combination parameter information, and the application environment information comprises at least one of:
generating a main antenna priority adjustment scheme in response to determining, according to the antenna state information, the network combination parameter information, and the application environment information, that an antenna control requirement corresponds to a main antenna;
generating an auxiliary antenna priority adjustment scheme in response to determining, according to the antenna state information, the network combination parameter information, and the application environment information, that the antenna control requirement corresponds to an auxiliary antenna;
generating an antenna code priority adjustment scheme in response to determining, according to the antenna state information, the network combination parameter information, and the application environment information, that the antenna control requirement corresponds to multiple antennas; or
generating a network combination priority adjustment scheme in response to determining, according to the antenna state information, the network combination parameter information, and the application environment information, that the antenna control requirement corresponds to a network combination.

7. The method according to claim 1 or 8, wherein in response to the antenna control scheme comprising a main antenna priority adjustment scheme, controlling the at least one antenna according to the antenna control scheme comprises:
generating main antenna switching trigger signaling, and switching a main antenna to another antenna according to the main antenna switching trigger signaling; and
calibrating and compensating for an adjusted main antenna.

8. The method according to claim 1 or 8, wherein in response to the antenna control scheme comprising an auxiliary antenna priority adjustment scheme, controlling the at least one antenna according to the antenna control scheme comprises:
generating auxiliary antenna switching trigger signaling, and switching an auxiliary antenna to another antenna according to the auxiliary antenna switching trigger signaling; and
calibrating and compensating for an adjusted auxiliary antenna.

9. The method according to claim 1 or 8, wherein in response to the antenna control scheme comprising an antenna code priority adjustment scheme, controlling the at least one antenna according to the antenna control scheme comprises:
determining a multi-antenna adjustment requirement corresponding to the antenna control scheme, wherein the multi-antenna adjustment requirements at least comprise at least one of: an over-the-air download performance requirement, a throughput requirement, interference requirement, an anti-interference and error code requirement, or a call and network requirement;
searching for antenna distribution corresponding to the multi-antenna adjustment requirement; and
adjusting a closure condition of a circuit corresponding to the at least one antenna according to the antenna distribution.

10. The method according to claim 1 or 8, wherein in response to the antenna control scheme comprising a network combination priority adjustment scheme, controlling the at least one antenna according to the antenna control scheme comprises:
determining a network combination corresponding to the antenna control scheme or a network combination application scenario corresponding to the antenna control scheme;
searching for antenna configuration corresponding to the network combination or the network combination application scenario; and
adjusting a closure condition of a circuit corresponding to the at least one antenna according to the antenna configuration.

11. An electronic device, comprising:
at least one processor; and
a memory configured to store at least one program;
wherein when executed by the at least one processor, the at least one program causes the at least one processor to perform the antenna control method according to any one of claims 1 to 10.

12. A computer-readable storage medium for storing at least one program, wherein the at least one program, when executed by at least one processor, implements the antenna control method according to any one of claims 1 to 10.
